Europäisches Patentamt

(19) European Patent Office

Office européen des brevets

(11) EP 0 657 241 B1

(12) ## EUROPEAN PATENT SPECIFICATION

(45) Date of publication and mention
of the grant of the patent:
**05.08.1998 Bulletin 1998/32**

(21) Application number: **94916393.5**

(22) Date of filing: **24.05.1994**

(51) Int. Cl.$^6$: **B23H 1/02**, B23H 7/04

(86) International application number:
**PCT/JP94/00830**

(87) International publication number:
**WO 95/00277 (05.01.1995 Gazette 1995/02)**

(54) **WIRE-CUT ELECTRICAL DISCHARGE MACHINE**

FUNKEROSIONSDRAHTSCHNEIDEMASCHINE

COUPE-FIL A DECHARGE ELECTRIQUE

(84) Designated Contracting States:
**CH DE LI**

(30) Priority: **18.06.1993 JP 147207/93**

(43) Date of publication of application:
**14.06.1995 Bulletin 1995/24**

(73) Proprietor: **FANUC LTD.**
**Minamitsuru-gun, Yamanashi 401-05 (JP)**

(72) Inventor:
**SAKURAI, Akihiro**
**Fanuc Dai-3 Vira-karamatsu**
**Minamitsuru-gun Yamanashi 401-05 (JP)**

(74) Representative:
**Brunner, Michael John**
**GILL JENNINGS & EVERY**
**Broadgate House**
**7 Eldon Street**
**London EC2M 7LH (GB)**

(56) References cited:
**JP-B-59 049 848**

## Description

### TECHNICAL FIELD

The present invention relates to a wire-cut electric discharge machine for machining a workpiece by producing electric discharge by applying a pulse voltage between a wire and a workpiece.

### BACKGROUND ART

A wire-cut electric discharge machine effects electric discharge machining by intermittently flowing a current between a wire and a workpiece using a switching element such as an FET or the like. Although the machining characteristics at the time are affected by a magnitude of a discharge current, the magnitude of the discharge current is determined by the discharge pulse width of a main current circuit, the power supply voltage of the main current circuit and the circuit impedance of an electric discharge cable and the like.

Incidentally, the discharge pulse width is affected by the operation delay time of a switching circuit and the operation delay time of the switching circuit is affected by temperature. As a result, a value of a discharge current is changed by the change of the operation delay time of the switching circuit caused by the temperature variation. Further, the value of the discharge current is also changed by the change of the power supply voltage of the main current circuit and the circuit impedance of the electric discharge cable and the like due to temperature variation. When the value of the discharge current is changed, the machining characteristics are changed and machining cannot be stably effected.

To cope with this problem, although the discharge pulse width is regulated by sensing a discharge current flowing to the workpiece and the wire so that a desired discharge current can be obtained, a problem arises in that since the operation for sensing the discharge current is affected by noise, it is difficult to correctly sense the discharge current and consequently the discharge pulse width cannot be accurately regulated.

An object of the present invention made by taking the above into consideration is to provide a wire-cut electric discharge machine capable of easily controlling a discharge current to an unvaried value.

To solve the above problem, according to the present invention, there is provided, a wire-cut electric discharge machine for machining a workpiece by producing electric discharge by applying a pulse voltage between a wire and the workpiece, the machine comprising:

main current drive means having a main current power supply and providing a discharge current with a predetermined electric discharge pulse width which contributes to actual machining; and current sensing means for sensing an output current output from said main current power supply; and characterised by counting means for counting the number of electric discharges of the discharge current; and electric discharge pulse width control means for calculating the value of the output current per one electric discharge operation from the output current and the number of electric discharges, and for controlling the electric discharge pulse width such that the output current per one electric discharge operation is equal to a preset reference value.

The main current drive means has the main current power supply and flows the discharge current with the predetermined electric discharge pulse width which contributes to actual machining. The current sensing means senses the output current output from the main current power supply, and the count means counts the number of electric discharge between the wire and the workpiece. The electric discharge pulse width control means calculates the value of the output current per one electric discharge operation from the output current and the number of electric discharge. The value of the output current per one electric discharge operation is substantially equal to the value of the discharge current per one electric discharge operation. The electric discharge pulse width control means controls the electric discharge pulse width so that the value of the output current per one electric discharge operation is made equal to a preset reference value.

In the accompanying drawings:

Fig. 1 is a view showing the arrangement of an electric discharge control apparatus according to the present invention;
FIG. 2 is a view showing the schematic arrangement of a wire-cut electric discharge machine of the present invention; and
FIG. 3 is a timechart of various signals in the electric discharge control apparatus.

### BEST MODE OF CARRYING OUT THE INVENTION

An embodiment of the present invention will be described below with reference to the drawings.

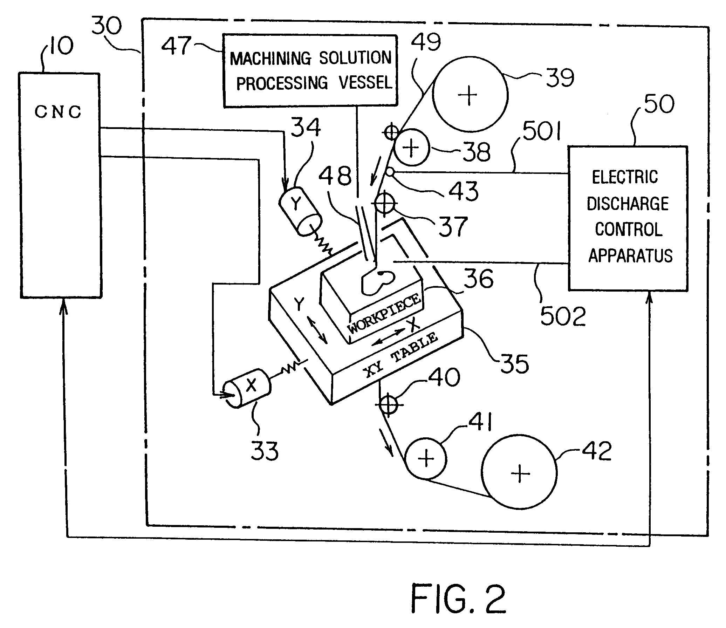

FIG. 2 is a view showing the schematic arrangement of a wire-cut electric discharge machine of the present invention. In FIG. 2, the wire-cut electric discharge machine is composed of a numerical control apparatus (CNC) 10 and an electric discharge machine main body 30.

The numerical control apparatus 10 reads and decodes a machining program stored in a memory and controls the electric discharge machine main body 30 as a whole such as the movement of a XY table 35, and the like by driving an X-axis servo motor 33 and a Y-axis servo motor 34.

The XY table 35 can be moved in two orthogonal axis directions by the X-axis servo motor 33 and the Y-axis servo motor 34. A workpiece 36 composed of an electric conductive material is fixed on the XY table 35. An upper wire guide 37 and a lower wire guide 40 are disposed above and below the XY table 35 and the workpiece 36 to hold a wire 49. These upper and lower wire guides 37 and 40 are used to correctly position the wire 49 with respect to the workpiece 36 to be machined. The wire 49 is continuously fed from a feed reel 39 and reaches the workpiece 36 through a brake 38 and the upper wire guide 37. The wire 49 having passed through the workpiece 36 also passes through the XY table 35 and then is accommodated in a wire winding reel 42 through the lower wire guide 40 and a wire feed roller 41.

An electric discharge control apparatus 50 includes two electric discharge cables 501 and 502 extending therefrom and they supply an electric discharge machining voltage between the wire 49 and the workpiece 36. One of the electric discharge cables 501 is connected to a power feeder 43 disposed between the upper wire guide 37 and the brake 38, and the other electric discharge cable 502 is electrically connected to the workpiece 36.

The electric discharge control apparatus 50 receives an On/Off signal from the numerical control apparatus 10 and optimally controls time intervals of On/Off of the discharge current, the detail of which will be described later. Further, the electric discharge control apparatus 50 receives a gap voltage between the wire 49 and the workpiece 36, converts the gap voltage into a digital value and sends the same to the numerical control apparatus 10. The numerical control apparatus 10 controls the X-axis servo motor 33 and the Y-axis servo motor 34 so that the XY table 35 is moved at a speed corresponding to the gap voltage. Further, the electric discharge control apparatus 50 electrically detects the short circuit between the wire 49 and the workpiece 36 and supplies a detection signal to the numerical control apparatus 10. The numerical control apparatus 10 supplies a command for releasing the short circuit in accordance with the short circuit detection signal to the electric discharge machine main body 30 to thereby relatively control the motion of the wire 49 by controlling the XY table 35.

A machining solution processing vessel 47 is composed of a tank, a filter unit, an ion exchanger and the like and supplies a machining solution to a portion to be machined of the workpiece 36 from a jet nozzle 48.

As described above, the numerical control apparatus 10 machines the workpiece 36 by moving the XY table 35 by outputting a control signal, feeding the wire 49 while supplying the machining solution from the nozzle 48 and causing pulse discharge between the wire 49 and the workpiece 36. When the pulse discharge is caused, the surface of the workpiece 36 is vaporized and melted so that the workpiece 36 is machined to a desired configuration.

Note, since a mechanism for controlling a position of the upper wire guide 37 to effect taper machining is not directly related to the present invention, the mechanism is not described here.

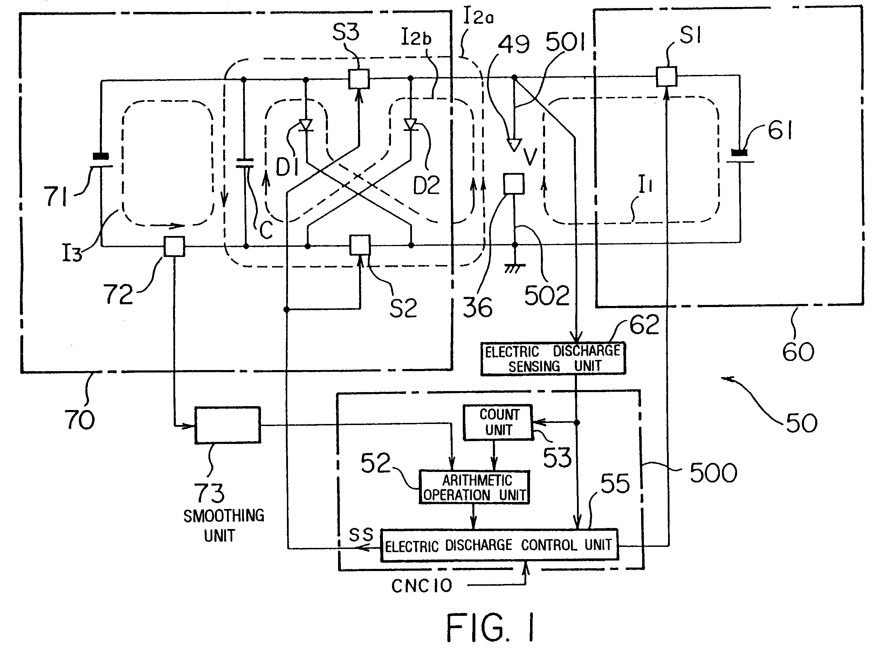

FIG. 1 is a view showing the arrangement of the electric discharge control apparatus 50 according to the present invention. In FIG. 1, the electric discharge control apparatus 50 is composed of a voltage application circuit 60, a main current circuit 70 and a controller 500. The voltage application circuit 60 is a circuit for making a chance of electric discharge and has a voltage application power supply 61 and a voltage application switching circuit S1 (hereinafter, referred to as a "voltage application switch S1"). The voltage application circuit 60 flows a current (initial electric discharge current) $I_1$ serving as a chance of electric discharge between the wire 49 and the workpiece 49. Note, a switching element used in the switching circuit of the present invention is, for example, an FET.

The main current circuit 70 is a circuit for flowing discharge currents $I_{2a}$, $I_{2b}$ which actually contribute to machining and has the following arrangement. That is, a main current switching circuit S2 (hereinafter, referred to as a "main current switch S2") is disposed in series between the main current power supply 71 and the workpiece 36 (electric discharge cable 502) and a main current switching circuit S3 (hereinafter, referred to as a "main current switch S3") is disposed in series between the main current power supply 71 and the wire 49 (electric discharge cable 501). A diode D1 has an anode terminal connected to the main current power supply 71 of the main current switch S3 and a cathode terminal connected to the electric discharge cable 502 of the main current switch S2, respectively, and a diode D2 has an anode terminal connected to the electric discharge cable 501 of the main current switch S3 and a cathode terminal connected to the main current power supply 71 of the main current switch S2, respectively. These two diodes D1 and D2 form a cross circuit. Further, a decoupling capacitor C is disposed in parallel with the main current power supply 71.

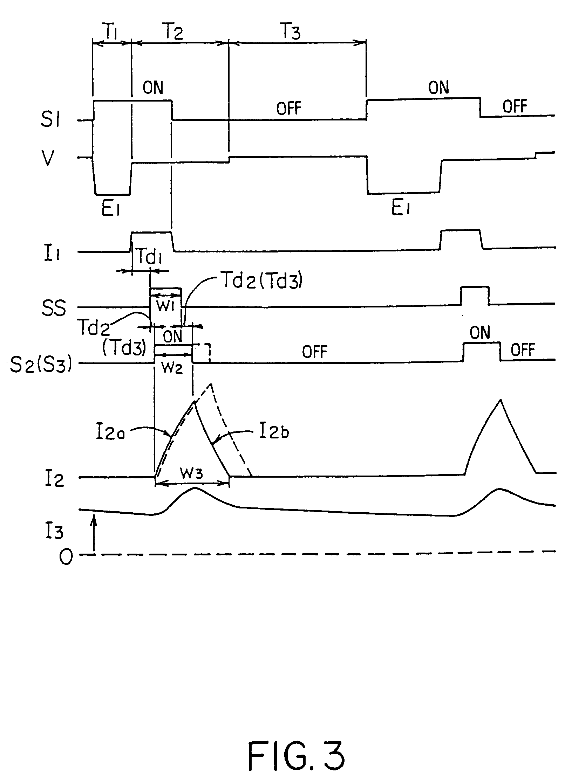

A current sensing unit 72 is disposed between the main current power supply 71 and the capacitor C. The current sensing unit 72 converts a current $I_3$ flowing to the closed circuit formed by the main current power supply 71 and the capacitor C into a voltage and senses the voltage. A sensed result is smoothed by a smoothing unit 73 and then supplied to the controller 500. Further, electric discharge between the wire 49 and the workpiece 36 is sensed by an electric discharge sensing unit 62. The controller 500 is mainly composed of a processor (CPU) and optimally controls the discharge currents $I_{2a}$ and $I_{2b}$ in response to signals sensed by the smoothing unit 73 and the electric discharge sensing unit 62. The control of the discharge current will be described also using the timechart of FIG. 3.

As shown in the upper portion of the timechart of FIG. 3, one cycle of electric discharge machining is composed of a voltage application period $T_1$, an electric discharge period $T_2$ during which the initial discharge current $I_1$ and the electric discharge currents $I_{2a}$, $I_{2b}$ which actually contribute to the machining flow and a pause period $T_3$ for recovering the insulated state between the wire 49 and the workpiece 36 after the above periods.

First, when the voltage application switch S1 is turned on in response to a command signal from the electric discharge control unit 55 of the controller 500, a gap voltage V between the wire 49 and the workpiece 36 is held to the power supply voltage $E_1$ of the voltage application power supply 61 until initial electric discharge starts. When the voltage application period $T_1$ has passed and the initial discharge current $I_1$ flows, the electric discharge sensing unit 62 senses the initial electric discharge and sends a sensing signal to the electric discharge control unit 55. On receiving the sensing signal, the electric discharge control unit 55 sends a drive signal SS having a predetermined pulse width $W_1$ to the main current switches S2 and S3 and simultaneously operates the main current switches S2 and S3. Note, there exists a time delay $Td_1$ due to the delay of sensing of the initial electric discharge and the like effected by the electric discharge sensing unit 62 before the drive signal SS is output after the initial discharge current $I_1$ flows.

On receiving the drive signal SS, the main current switches S2 and S3 are operated during a period corresponding to the pulse width $W_1$ of the drive signal SS and closed, so that the main current circuit 70 is made to a closed circuit. As a result, an electric charge charged to the capacitor C is discharged and the discharge current $I_{2a}$ flows. When the drive signal SS is turned off and the main current switches S2, S3 are opened accordingly, the diodes D1 and D2 are transitionally conducted by the circuit inductance existing between the wiring cable 501 and the main current switch S3 and the circuit inductance and the like existing between the wiring cable 502 and the main current switch S3, so that the discharge current $I_{2b}$ flows.

Here, a period $W_2$ during which the main current switches S2, S3 are closed corresponds to the pulse width $W_1$ of the drive signal SS to which the operation delay times $Td_2$ and $Td_3$ of the main current switches S2, S3 are added. Further, a period (electric discharge period) $W_3$ during which the discharge currents $I_{2a}$, $I_{2b}$ flow corresponds to the closed period $W_2$ of the main current switches S2, S3.

Incidentally, since the operation delay time $Td_2$, $Td_3$ of the main current switches S2, S3 are subjected to the temperature variation of the main current switches S2, S3, the closed period $W_2$ of the main current switches S2, S3 also varies as shown by the dotted line in FIG. 3 and as a result the electric discharge period $W_3$ also varies accordingly. The variation of the electric discharge period $W_3$ deteriorates machining characteristics.

To cope with this problem, this embodiment optimally controls the discharge currents $I_{2a}$ and $I_{2b}$ based on the current $I_3$ sensed by the current sensing unit 72 and the number of electric discharge sensed by the electric discharge sensing unit 62, as described above.

More specifically, the count unit 53 of the controller 500 sends the number of electric discharge sensed by the electric discharge sensing unit 62 to the arithmetic operation unit 52 thereof. The arithmetic operation unit 52 calculates the total sum of the current $I_3$ per one electric discharge operation, i.e., one cycle of electric discharge machining operation ($T_1 + T_2 + T_3$) based on the current $I_3$ converted into the voltage value and sent through the smoothing circuit 73 and the number of electric discharge. The total sum of the current $I_3$ per one cycle of electric discharge machining operation is substantially equal to the sum of the currents $I_{2a}$ and $I_{2b}$ which are discharge currents per one electric discharge operation. This is because that the current $I_3$ is charged in the capacitor C and the electric charge charged in the capacitor C becomes the discharge currents $I_{2a}$, $I_{2b}$ between the wire 49 and the workpiece 36. The electric discharge control unit 55 controls the pulse width $W_1$ of the drive signal SS to be sent to the main current switches S2, S3 so that the total sum of the current $I_3$ per one cycle of electric discharge machining operation is made equal to a preset reference value.

As described above, according to the present invention, the total sum of the current $I_3$ per one cycle of electric discharge machining operation is determined by sensing the number of electric discharge operation, and the pulse width $W_1$ of the drive signal SS from the electric discharge control unit 55 is controlled so that the total sum is made equal to the reference value. More specifically, the drive signal SS can be properly output, taking into consideration even the temperature variation of the operation delay times $Td_2$ and $Td_3$ of the main current switches S2, S3. Therefore, the discharge currents $I_{2a}$, $I_{2b}$ can be easily held to desired values.

Further, when discharge currents $I_{2a}$, $I_{2b}$ are controlled, they are not sensed through the electric discharge cables 501, 502 which are liable to be affected by noise but the output current $I_3$ is sensed in the main current power supply 71. Since the current output $I_3$ can be sensed without being affected by noise, the discharge currents $I_{2a}$, $I_{2b}$ can be controlled with a pinpoint accuracy.

As described above, according to the present invention, the value of an output current per one electric discharge operation is calculated based on the current output from the main current power supply and the number of electric discharge, and an electric discharge pulse width is controlled so that the value of the output current per one electric discharge operation is made equal to the preset reference value. As a result, the electric discharge pulse width can be properly controlled, taking the variation of the discharge current due to temperature change, so that the discharge current can be easily held to a desired value.

Further, when discharge currents are controlled, the discharged currents are not sensed through the electric discharge cables which are liable to be affected by noise but the output current is sensed in the main current power supply. Since the output current can be sensed without being affected by noise, the discharge currents can be controlled with a pinpoint accuracy.

## Claims

1. A wire-cut electric discharge machine for machining a workpiece by producing electric discharge by applying a pulse voltage between a wire (49) and the workpiece (36), the machine comprising:

    main current drive means (72) having a main current power supply (71) and providing a discharge current with a predetermined electric discharge pulse width ($W_3$) which contributes to actual machining; and
    current sensing means (72) for sensing an output current output from said main current power supply (71); and characterised by
    counting means for counting the number of electric discharges of the discharge current; and
    electric discharge pulse width control means (50) for calculating the value of the output current per one electric discharge operation from the output current and the number of electric discharges, and for controlling the electric discharge pulse width such that the output current per one electric discharge operation is equal to a preset reference value.

2. A wire-cut electric discharge machine according to claim 1, wherein said electric discharge pulse width control means (50) controls the electric discharge pulse width ($W_3$) by altering the time that a switching element (S1) provided in the main current drive means (72) is turned on.

3. A wire-cut electric discharge machine according to claim 1, further comprising a voltage application power supply (61) for providing an initial electric discharge between the wire (49) and the workpiece (36), wherein:

    the discharge current is provided following the initial electric discharge;
    and the number of electric discharges of the discharge current is the same as the number of electric discharges of the initial electric discharge.

4. A wire-cut electric discharge machine according to claim 1, wherein said main current drive means (70) includes a cross circuit having two switching elements (S2,S3).

5. A wire-cut electric discharge machine according to claim 1, further comprising means (72,73) for representing the output current by a smoothed voltage signal.

## Patentansprüche

1. Funkenerosionsdrahtschneidemaschine zum maschinellen Bearbeiten eines Werkstücks durch Erzeugen elektrischer Entladung durch Anlegen einer gepulsten Spannung zwischen einem Draht (49) und dem Werkstück (36), wobei die Maschine folgendes umfaßt:

    ein Hauptstromansteuermittel, das eine Stromversorgung (71) für den Hauptstrom aufweist und einen Entladestrom mit einer vorbestimmten, zur eigentlichen maschinellen Bearbeitung beitragenden Impulsbreite ($W_3$) für die elektrische Entladung liefert; und

    ein Strommeßmittel (72) zum Messen eines von der Stromversorgung (71) für den Hauptstrom abgegebenen Ausgangsstroms; gekennzeichnet durch

    ein Zählmittel zum Zählen der Anzahl der elektrischen Entladungen des Entladestroms; und

    ein Impulsbreitensteuermittel (50) für die elektrische Entladung, um den Wert des Ausgangsstroms pro elektrischem Entladevorgang aus dem Ausgangsstrom und der Anzahl elektrischer Entladungen zu berechnen und um die Impulsbreite der elektrischen Entladung derart zu steuern, daß der Ausgangsstrom pro elektrischer Entladung gleich einem voreingestellten Bezugswert ist.

2. Funkenerosionsdrahtschneidemaschine nach Anspruch 1, bei der das Impulsbreitensteuermittel (50) für die elektrische Entladung die Impulsbreite ($W_3$) für die elektrische Entladung durch Verändern der Zeit steuert, während der ein im Hauptstromansteuermittel vorgesehenes Schaltelement (S1) eingeschaltet ist.

3. Funkenerosionsdrahtschneidemaschine nach Anspruch 1, die weiterhin eine Spannungsanlege-Stromversorgung (61) zum Liefern einer anfänglichen elektrischen Entladung zwischen dem Draht (49) und dem Werkstück (36) umfaßt, bei der

    der Entladestrom nach der anfänglichen elektrischen Entladung bereitgestellt wird;

und die Anzahl elektrischer Entladungen durch den Entladestrom gleich der Anzahl elektrischer Entladungen durch die anfängliche elektrische Entladung ist.

4. Funkenerosionsdrahtschneidemaschine nach Anspruch 1, bei der das Hauptstromansteuermittel eine Kreuzschaltung mit zwei Schaltelementen (S2, S3) enthält.

5. Funkenerosionsdrahtschneidemaschine nach Anspruch 1, die weiterhin Mittel (72, 73) zum Darstellen des Ausgangsstroms durch ein geglättetes Spannungssignal umfaßt.

**Revendications**

1. Machine d'usinage par étincelage à découpe par fil pour usiner une pièce en produisant une décharge électrique par application d'une tension à impulsions entre un fil (49) et la pièce à usiner (36), la machine comprenant:

   un moyen de commande de courant de secteur possédant une alimentation électrique de courant de secteur (71) et procurant un courant de décharge possédant une largeur des impulsions de décharges électriques prédéterminée (W₃) qui contribue à l'usinage proprement dit; et
   un moyen de détection de courant (72) pour détecter un courant de sortie provenant de ladite alimentation électrique de courant de secteur (71); et caractérisée par
   un moyen de comptage pour compter le nombre de décharges électriques du courant de décharge; et
   un moyen de contrôle de la largeur des impulsions de décharges électriques pour calculer la valeur du courant de sortie par opération de décharge électrique à partir du courant de sortie et du nombre de décharges électriques et pour contrôler la largeur des impulsions de décharges électriques de telle sorte que le courant de sortie par opération de décharge électrique est égal à une valeur de référence préréglée.

2. Machine d'usinage par étincelage à découpe par fil selon la revendication 1, dans laquelle ledit moyen de contrôle de la largeur des impulsions de décharges électriques (50) contrôle la largeur des impulsions de décharges électriques (W₃) en modifiant le temps de mise en circuit d'un élément de commutation (S1) prévu dans le moyen de commande de courant de secteur.

3. Machine d'usinage par étincelage à découpe par fil selon la revendication 1, comprenant en outre une alimentation électrique d'application de tension (61) pour procurer une décharge électrique initiale entre le fil (49) et la pièce à usiner (36), dans laquelle:

   le courant de décharge est fourni suite à la décharge électrique initiale;
   et le nombre de décharges électriques du courant de décharge est égal au nombre de décharges électriques de la décharge électrique initiale.

4. Machine d'usinage par étincelage à découpe par fil selon la revendication 1, dans laquelle ledit moyen de commande de courant de secteur englobe un circuit transversal comportant deux éléments de commutation (S2, S3).

5. Machine d'usinage par étincelage à découpe par fil selon la revendication 1, comprenant en outre des moyens (72, 73) pour représenter le courant de sortie par un signal à tension filtrée.

EP 0 657 241 B1

I2a
S3
I2b
49
501
S1
71
D1
D2
61
I3
C
V
I1
72
S2
36
502
62

ELECTRIC DISCHARGE
SENSING UNIT

60

50

COUNT
UNIT

53

52

ARITHMETIC
OPERATION UNIT

55

500

70

73
SMOOTHING
UNIT

SS

ELECTRIC DISCHARGE CONTROL UNIT

CNC10

FIG. 1

FIG. 2

FIG. 3